# EUROPEAN PATENT SPECIFICATION

(11) **EP 2 970 584 B1**
(45) Date of publication and mention of the grant of the patent: **30.12.2020**
(21) Application number: 14732656.5
(22) Date of filing: 17.03.2014
(51) Int. Cl.: C08G 65/336, C08G 18/71, C08G 18/28, C09J 171/02, C09J 175/04

(54) **BONDING ADHESIVE AND ADHERED ROOFING SYSTEMS PREPARED USING THE SAME**
HAFTBINDEMITTEL UND HAFTENDE DACHSYSTEME DAMIT
ADHÉSIF DE LIAISON ET SYSTÈMES DE COUVERTURE COLLÉS PRÉPARÉS À L'AIDE DE CELUI-CI

(30) Priority: 15.03.2013 US 201361786794 P
(43) Date of publication of application: 20.01.2016
(73) Proprietor: Firestone Building Products Company, LLC, Nashville, TN 37201 (US)
(72) Inventor: TANG, Jiansheng, Westfield, Indiana 46074 (US); CARR, Joseph, Indianapolis, Indiana 46250 (US)
(74) Representative: Adam, Holger
(86) International application number: PCT/US2014/030257
(87) International publication number: WO 2014/145482

(56) References cited:
- EP-A1- 1 462 500
- US-A1- 2010 317 796

## Description

### FIELD OF THE INVENTION

Embodiments in the invention are directed toward a silicon-containing bonding adhesive and a method for forming an adhered membrane roof system using the bonding adhesive.

### BACKGROUND OF THE INVENTION

Polymeric membranes, such as cured sheets of ethylene-propylene-diene copolymer rubber (EPDM) or extruded sheet of thermoplastic olefins (TPO), are often used in the construction industry to cover flat or low-sloped roofs. These membranes, which may also be referred to as panels, are typically delivered to a construction site in a bundled roll, transferred to the roof, and then unrolled and positioned. The sheets are then affixed to the building structure by employing varying techniques such as mechanical fastening, ballasting, and/or adhesively adhering the membrane to the roof. The roof substrate to which the membrane is secured may include a variety of materials depending on the situation. For example, the surface may be a concrete, metal, or wood deck, it may include insulation or recover board, and/or it may include an existing membrane.

In addition to securing the membrane to the roof - which mode of attachment primary seeks to prevent wind uplift - the individual membrane panels, together with flashing and other accessories, are positioned and adjoined to achieve a waterproof barrier on the roof. Typically, the edges of adjoining panels are overlapped, and these overlapping portions are adjoined to one another through a number of methods depending upon the membrane materials and exterior conditions. One approach involves providing adhesives or adhesive tapes between the overlapping portions, thereby creating a water-resistant seal.

Thus, there are two modes of membrane attachment that are used in conjunction. The first seeks to anchor the membrane to the roof, while the second seeks to create a water-impervious barrier by attaching individual adjacent membrane panels to each other or to flashing. Inasmuch as these modes of membrane attachment seek entirely different goals, the mechanisms by which they operate are likewise distinct.

Adhesive attachment is typically employed to form adhered roofing systems. The membrane may be adhered to the roof substrate substantially across the entire planar surface of the membrane to form fully-adhered systems. In other words, a majority, if not all, of the membrane panel is secured to the roof substrate as opposed to mechanical attachment methods which can only achieve direct attachment in those locations where a mechanical fastener actually affixes the membrane. Fully-adhered roofing systems are advantageously installed where maximum wind uplift prevention is desired. Also, fully-adhered systems are desirable in re-roofing situations, especially where the new membrane is placed over an existing membrane (a technique that is commonly referred to as re-skinning).

Several techniques are employed to prepare fully-adhered roofing systems. One technique includes the use of a fleece-backed EPDM membrane that is secured to the substrate by using a low-rise polyurethane foam adhesive that is sprayed over the substrate. Once the adhesive polyurethane foam is applied, the fleece-backed membrane is applied to the adhesive layer, which attaches itself to the fleece backing. Alternatively, nitrile-based bond adhesives can be applied to the substrate and the fleece-backed EPDM membrane can be secured thereto. Because these systems require fleece-backed membranes, they are expensive and suffer from manufacturing inefficiencies relating to the need to secure the fleece to the membrane.

Other techniques employ conventional EPDM membrane sheet, which is not modified with a fleece backing. In these situations, it is common to employ a contact bonding method whereby technicians coat both the membrane and the substrate that receives the membrane with an adhesive. The adhesive is then typically allowed to at least partially set to, among other things, build some wet green strength. The membrane is then mated with the substrate via the partially-set adhesive. Because the volatile components (e.g. solvent) of the adhesives are "flashed off' prior to mating, good, early (green) bond strength can advantageously be developed.

One technique employs a water-borne bond adhesive that is applied to the substrate and then the EPDM membrane can be applied to the adhesive layer. While this attachment technique has proven useful, the use is generally limited to ambient weather conditions (e.g. greater than 40 °C) and/or in conjunction with porous substrates that absorb water thereby allowing the adhesive to dry or cure without blistering the membrane.

In other situations, solvent-based adhesives are employed, such as polychloroprene-based bond adhesives. While the use of known solvent-based adhesives has proven versatile to the extent that the substrate need not be porous and cold-weather application is feasible, the technique requires application of the adhesive to both the substrate and the membrane, followed by a time delay to allow the solvent to flash off, and then a mating of the two adhesive surfaces (i.e., the adhesive coated membrane is mated to the adhesive coated substrate).

In yet other situations, 100% solids bond adhesives are employed. For example, U.S. Pat. No. 7,767,308 teaches a moisture-curable bond adhesive that includes a polymer or a combination of polymers having silicon-containing hydrolyzable terminal groups, a phenolic resin, and a non-polymeric silicon-containing hydrolyzable compound. While these bond adhesives are touted for being free of volatile organic compounds (VOCs), safe for chronic exposure, and non-flammable, and yet provide a high initial peel strength and/or high peel strength upon being fully cured between a roof substrate and a rubber membrane, it would nonetheless be desirable to formulate a bond adhesive that does not include a phenolic resin. EP 1 462 500 A1 discloses an edge sealant composition comprising a silylated (pre-)polymer of polyurethane or polyurea with a hydrocarbon tackifier, in addition to other components.

While both solvent-based and water-based adhesives may be used as contact adhesives, solvent-based bonding adhesives offer advantages. For example, the flash-off period, which is the time required to allow solvent evaporation prior to mating, can be between 5 and 40 minutes, and is less susceptible to environmental conditions, such as temperature, than water-based adhesive systems. Solvent-based systems, on the other hand, can be problematic. For example, the solvent employed in the system can cause membrane swelling and/or blistering. It is believed swelling and blistering results from solvent compatibility with the membrane and/or a component of the membrane. Other problems can include blushing, which is the formation of condensation on the surface of the film formed upon application of the adhesive to the membrane. Blushing can have a deleterious impact on the bond strength and/or quality of the bond formed by the adhesive and is therefore not desirable.

The evaporation of solvents can be problematic, especially as the desire to minimize release of volatile organic compounds increases. Thus, both water-borne and solvent-borne systems known in the art today have limitations, and there is therefore a desire for a bond adhesive that overcomes these advantages.

### SUMMARY OF THE INVENTION

One or more embodiments of the present invention provide a bond adhesive composition in accordance with claim 1 comprising a polymer having a silicon-containing hydrolyzable terminal group and a hydrocarbon resin, where the composition is substantially devoid of phenolic resin.

Other embodiments of the present invention in accordance with claim 3 provide a method for forming an adhered membrane roof system, the method comprising applying a bond adhesive to a substrate on a roof to form an adhesive layer, where the bond adhesive includes a polymer having a silicon-containing hydrolyzable terminal group and a hydrocarbon resin devoid of phenolic resin and applying a membrane directly to the adhesive layer.

### BRIEF DESCRIPTION OF THE DRAWINGS

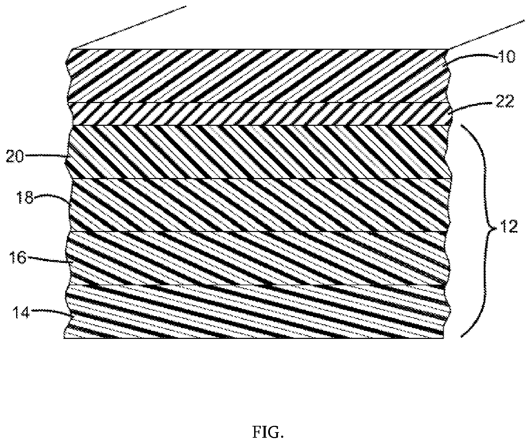

The figure is a cross sectional view of a roofing system including EPDM membrane adhered to a substrate using an adhesive according to one or more embodiments of the present invention.

### DETAILED DESCRIPTION OF ILLUSTRATIVE EMBODIMENTS

Embodiments of the invention are based, at least in part, on the discovery of a bond adhesive that includes a polymer having silicon-containing hydrolyzable terminal group and a hydrocarbon resin. These bond adhesives are advantageously devoid or substantially devoid of phenolic resins. In one or more embodiments, these bond adhesive compositions can be used to bond polymeric substrates (e.g. roofing membranes) to other substrates (e.g., isocyanate construction boards). And, these membranes need not be fleece-backed membranes. Indeed, fully-adhered systems that advantageously meet FM 4470/4474 standards for wind uplift can be prepared in the absence of a fleece backing. Moreover, it has been unexpectedly discovered that these adhered systems can be mated to a variety of substrates including existing membranes, which thereby provides a unique method for re-roofing or re-skinning an existing roof. Additionally, the adhesives of this invention can be used to prepare fully-adhered roofing systems by simply applying the adhesive to the substrate, and then subsequently mating the membrane to the adhesive layer formed on the substrate without the need to directly apply the adhesive to the membrane. Still further, it has been advantageously discovered that the adhesive composition of the invention can be prepared to have relatively low dynamic viscosity, which advantageously allows the adhesive to be spread at relatively high rates of coverage while maintaining technologically useful adhesive properties. Moreover, adhesive compositions of certain embodiments can advantageously be prepared with thixotropic agents that provide the adhesive with relatively high static viscosity, which likewise improves coverage rates by limiting the amount of adhesive absorption in the substrate.

### ADHESIVE COMPOSITION

As discussed above, the adhesive compositions of this invention include a polymer having silicon-containing a hydrolyzable terminal group and a hydrocarbon resin. In addition, the adhesive compositions include a plasticizer as well as at least one of a catalyst, a moisture scavenger, an adhesion promoter and a thixotropic compound. -In one or more embodiments, the adhesive composition is a 100% solids composition (i.e. it is solvent free), and the composition is devoid or substantially devoid of a phenolic resin.

### SILANE-TERMINATED POLYMERS

The polymer having silicon-containing hydrolyzable terminal group is a silane-terminated polymer, which may also be referred to as silyl-terminated polymer. The term "silicon-containing hydrolyzable terminal group" as used herein means a group wherein at least one silicon atom is combined with a hydrolyzable group, such as a methoxy group, which is subject to hydrolysis and polymerization by moisture.

The backbone of the polymer having silicon-containing hydrolyzable terminal groups may be comprised of polyethers, polyesters, polyurethanes (SPUR), or other suitable backbones.

Suitable polymers having silicon-containing hydrolyzable terminal groups are commercially available and/or can be prepared in accordance with techniques known in the art. Examples of suitable commercially available polymers having silicon-containing hydrolyzable terminal groups are Geniosil™ STP-E 35 trimethoxysilylpropyl-carbamate-terminated polyether, and Geniosil™ STP-E 30 silane-terminated polyether with dimethoxy(methyl)silylmethylcarbamate terminal groups, both of which are available from Wacker Chemical. Another commercially available polymer having silicon-containing hydrolyzable terminal groups that may be employed in the adhesive compositions of this invention is "SPUR+" silane-terminated polyurethanes, which are available from Momentive. Another suitable commercially available material is "MS" silyl-terminated polyether (S227H, S303, S327, S303H, SAX350), which are available from Kaneka.

While the use of a hydrocarbon resin within the adhesive compositions of the present invention provide the composition with an advantageous dynamic viscosity, it has also been discovered that further adjustments to viscosity can be advantageously accomplished, while maintaining adequate adhesion, by employing certain blends of polymers having silicon-containing hydrolyzable terminal groups. In particular embodiments, these blends include polymers having a relatively high molecular weight combined with polymers having a relatively low molecular weight. In one or more embodiments, the high molecular weight polymers having a silicon-containing hydrolyzable terminal group have a number average molecular weight greater than 12,000 g/mole, in other embodiments greater than 13,000 g/mole, in other embodiments greater than 14,000 g/mole, and in other embodiment greater than 14,000 g/mole. In one or more embodiments, the high molecular weight polymers having a silicon-containing hydrolyzable terminal group have a number average molecular weight of from about 12,000 to 30,000, in other embodiments from about 13,000 to about 25,000, and in other embodiments from about 14,000 to about 20,000 g/mole. In these or other embodiments, the high molecular weight polymers having a silicon-containing hydrolyzable terminal group are characterized by a polydispersity of from about 1.5 to about 4.0, in other embodiments from about 1.8 to about 3.5, and in other embodiments from about 2.0 to about 3.0.

In these or other embodiments, low molecular weight polymers having a silicon-containing hydrolyzable terminal group have a number average molecular weight of less than 12,000 g/mole, in other embodiments less than 11,000 g/mole, and in other embodiments less than 10,000 g/mole. In one or more embodiments, the low molecular weight polymers having a silicon-containing hydrolyzable terminal group have a number average molecular weight of from about 5,000 to 12,000, in other embodiments from about 7,000 to about 11,000, and in other embodiments from about 8,000 to about 10,000 g/mole. In these or other embodiments, the low molecular weight polymers having a silicon-containing hydrolyzable terminal group are characterized by a polydispersity of from about 1.1 to about 3.0, in other embodiments from about 1.2 to about 2.5, and in other embodiments from about 1.3 to about 2.0.

### HYDROCARBON RESIN

The adhesive composition : includes one or more hydrocarbon resins. In one or more embodiments, the hydrocarbon resins may include natural resins, synthetic resins, and low molecular weight polymers or oligomers. The monomer that may be polymerized to synthesize the synthetic resins or low molecular weight polymers or oligomers is a C9 aromatic monomer. Examples of aromatic monomer include indene, derivatives of indene, and combinations thereof.

In one or more embodiments, examples of hydrocarbon resins include at least partially hydrogenated aromatic hydrocarbon resins.

In certain embodiments, the synthetic aliphatic or aromatic hydrocarbon resins may be characterized by a number average molecular weight (Mₙ) of from about 300 g/mole to about 3,000 g/mole, and in other embodiments from about 500 g/mole to about 2,000 g/mole. These hydrocarbon resins may also be characterized by a weight average molecular weight (M_{w}) of from about 500 g/mole to about 6,000 g/mole, and in other embodiments from about 700 g/mole to about 5,000 g/mole. Molecular weight may be determined by size exclusion chromatography (SEC) by using a Waters 150 gel permeation chromatograph equipped with the differential refractive index detector and calibrated using polystyrene standards.

The hydrocarbon resins may be characterized by an aromatic content of from about 1 to about 60, in other embodiments from about 2 to about 40, and in other embodiments from about 5 to about 10. In one or more embodiments, the tackifier resins are hydrogenated or partially hydrogenated; useful resins include those that are at least 50 percent, in other embodiments at least 80 percent, in other embodiments at least 95 percent, and in other embodiments at least 99 percent or fully hydrogenated. For example, the hydrocarbon resin prior to grafting may contain less than 90, in other embodiments less than 50, in other embodiments less than 25, in other embodiments less than 10, in other embodiments less than 2, in other embodiments less than 1, in other embodiments less than 0.5, and in other embodiments less than 0.05 olefinic protons. Aromatic content and olefin content may be measured by ¹H-NMR as measured directly from the ¹H NMR spectrum from a spectrometer with a field strength greater than 300 MHz, and in other embodiments 400 MHz (frequency equivalent). Aromatic content includes the integration of aromatic protons versus the total number of protons. Olefin proton or olefinic proton content includes the integration of olefinic protons versus the total number of protons.

In one or more embodiments, the hydrocarbon resin may be characterized by a softening point of from about 5 °C to about 210 °C, in other embodiments from about 65 °C to about 170 °C, and in other embodiments from about 90°C to about 140 °C. Softening point can be determined according to ASTM E-28 (Revision 1996.

In these or other embodiments, the hydrocarbon resin may be characterized by a glass transition temperature of less than 120 °C, in other embodiments less than 110 °C, and in other embodiment from about -40 °C to about 80 °C. Glass transition temperature may be determined according to ASTM D 341-88 by using differential scanning calorimetry.

In these or other embodiments, the hydrocarbon resin may be characterized by a Saponification number (mg KOH/g resin material) of greater than 10, in other embodiments greater than 15, and in other embodiments greater than 19.

In these or other embodiments, the hydrocarbon resin may be characterized by an acid number greater than 10, in other embodiments greater than 15, and in other embodiments greater than 20, and in other embodiments greater than 25.

### ADHESION PROMOTER

In one or more embodiments, the adhesion promoter includes a non-polymeric silicon-containing hydrocarbon compound that has a lower molecular weight than the polymer having a silicon-containing hydrolysable group (i.e. the silane-terminate polymer). Also, the adhesion promoter includes at least one hydrolyzable group capable of reacting with a hydrolyzed functional group on the polymer having silicon-containing hydrolyzable terminal groups, and includes at least one moiety capable of interacting (i.e., promoting adhesion) with materials that are to be bonded with one another (such as a rubber membrane material). The expression non-polymeric, as used to modify the silicon-containing hydrocarbon compound is meant to exclude polymers and copolymers having at least 10 repeat units or monomeric units, such as urethane prepolymers having silicon-containing hydrolyzable terminal groups, but is meant to encompass oligomeric silicon-containing hydrolyzable compounds having fewer than 10 repeat units or monomers, and which are useful for promoting adhesion between a substrate and a cured adhesive composition. Examples of suitable aminosilane adhesion promoters that may function as the non-polymeric silicon-containing hydrolyzable compound include, but are not limited to gamma-aminopropyltrimethoxysilane, gammaaminopropyltriethoxysilane, gamma-(aminoethyl)-aminopropyltrimethoxy- silane, methylaminopropyldimethoxysilane, methyl-gamma- (aminoethyl) - aminopropyldimethoxysilane, gamma-dimethylaminopropyltrimethoxysilane, and the like.

### PLASTICIZERS

Examples of a plasticizer include phthalic acid esters (such as dioctyl phthalate, diisooctyl phthalate, dibutyl phthalate, diundecyl phthalate, diisononyl phthalate, diisodecyl phthalate, diisodocecyl phthalate and butylbenzyl phthalate); aliphatic dibasic acid esters (such as dioctyl adipate, isodecyl succinate, and dibutyl sebacate); glycol esters (such as diethylene glycol dibenzoate and pentaerythritol ester); aliphatic esters (such as butyl oleate and methyl acetylricinoleate); phosphoric acid esters (such as tricresyl phosphate, trioctyl phosphate, and octyldiphenyl phosphate); epoxy plasticizers (such as epoxidated soybean oil, epoxidated linseed oil, and benzyl epoxystearate); polyester plasticizers (such as polyesters of dibasic acid and a divalent alcohol); polyethers (such as polypropylene glycol and its derivatives); polystyrenes (such as poly-α-methylstyrene and polystyrene); polybutadiene butadiene-acrylonitrile copolymer; polychloroprene; polyisoprene; polybutene; chlorinated paraffins; benzoic esters; glycol esters; phosphoric esters; sulfonic esters; and mixtures thereof, wherein any given compound is different than an ingredient otherwise included in the composition of the invention.

In addition, high-molecular weight plasticizers can also be used. Specific examples of such high-molecular weight plasticizer include, but are not limited to, vinyl polymers obtainable by polymerizing a vinyl monomer by various methods; polyalkylene glycol esters such as diethyl ene glycol dibenzoate, triethylene glycol dibenzoate and pentaerythritol esters; polyester plasticizers obtainable from a dibasic acid, such as sebacic acid, adipic acid, azelaic acid or phthalic acid, and a dihydric alcohol, such as ethylene glycol, diethylene glycol, triethylene glycol, propylene glycol or dipropylene glycol; polyethers such as polyether polyols, e.g. polyethylene glycol, polypropylene glycol and polytetramethylene glycol that have a molecular weight of 500 or more, and even further 1,000 or more, and derivatives of these as obtainable by converting the hydroxyl groups of these polyether polyols to an ester, ether or the like groups; polystyrenes such as polystyrene and poly-α-methylstyrene; polybutadiene, polybutene, polyisobutylene, butadiene-acrylonitrile, polychloroprene and the like. In one or more specific embodiments, plasticizers include propylene glycol dibenzoate, diisononyl phthalate, and soy methyl esters, Mesamol II, HB-40, butylbenzylphthalate. In other specific embodiments, the plasticizers employed are phthalic acid esters. In one or more embodiments, the plasticizers may include high boiling solvents that promote tackification, lowering of viscosity, and sprayability.

### MOISTURE SCAVENGER

In one or more embodiments, a moisture scavenger is employed in the adhesive compositions of this invention. Moisture scavengers that may be employed include chemical moisture scavengers and physical moisture scavengers that absorb and/or adsorb moisture. In particular embodiments, the chemical moisture scavenger is vinyl-trimethoxysilane, which may be employed in an amount of up to about 3% by weight based on the total weight of the adhesive composition. An example of a physical moisture scavenger that may be employed is 3A Sieves from UOP, which is a zeolite having 3 Angstrom pores capable of trapping moisture. Other moisture scavengers that may be employed include oxazoladines and calcium oxide.

### THIXOTROPE

In one or more embodiments, suitable thixotropic agents may include, but are not limited to, polyvinylpyrrolidone, titanate coupling agents, metal soaps (such as calcium stearate, aluminum stearate, and barium stearate, aluminum distearate, and aluminum tristearate), copolymers with acidic groups, compounds having ionic groups, fumed silica, colloidal silica, asbestine, organic derivatives of castor oil (such as hydrogenated castor oil derivatives), treated clays, organic bentonite, modified polyester polyols (such as polyoxyethylene-polyoxypropylene block copolymers), aliphatic amides, and polyamides (such as polyamide waxes). Specific examples include polyamide waxes, such as "Crayvallac SLX" available from Arkema, or polymerized castor oils such as Flowtone R from Crayvalley.

### ANTIOXIDANTS

Antioxidants that may be employed if desired. Examples of useful antioxidants include hindered phenols and phosphate esters.

### FILLERS

Generally, any compatible filler, such as calcium carbonate may be employed if desired for a particular application. As the skilled person will appreciate, fillers will generally be omitted when the adhesive composition is intended to be sprayed onto one surface that is subsequently applied to a second surface on which the adhesive is or is not deposited.

### CATALYST

As mentioned above, the adhesive composition may include one or more catalysts for the purpose of promoting the crosslinking the silane-terminated polymer. Without wishing to be bound by any particular theory, it is believed that these catalysts promote the hydrolysis and condensation of organosilicon compounds (i.e., reactions between the terminal groups of the polymer having silicon-containing hydrolyzable terminal groups, and reactions between the optional adhesion promoter when present and the polymer having silicon-containing hydrolyzable terminal groups). In one or more embodiments, hydrolysis of organosilicon compounds may be catalyzed by either acids or bases. Useful basic catalysts that may be employed in the compositions of this invention include alkali metal hydroxides such as potassium hydroxide, silanolates such as lithium silanolate, organic amines, and Lewis bases such as alkali metal carbonates and bicarbonates. Suitable acid catalysts include mineral acids such as sulfuric and phosphoric acids, organic acids such as acetic, propanoic and methane sulfonic acids. Other suitable acid catalysts include Lewis acids such as aluminum chloride, organotin compounds such as dibutyl tin dilaurate and titanium compounds such as the alkyl ortho esters, including tetrabutyl titanate.

### PHENOLIC RESIN

As mentioned above, the adhesive composition is devoid or substantially devoid of a phenolic resin. As used herein, the term phenolic resin refers to a phenol-formaldehyde resin. For example, the term phenolic resin may include a novolac resin, which is a phenol-formaldehyde resin where the molar ratio of the formaldehyde to phenol is less than one. These resins are typically synthesized by using an acid catalyst. The term phenolic resin also refers resol resins wherein the molar ratio of the formaldehyde to phenol is greater than one. These resins are typically synthesized by using a base catalyst.

### SOLVENT

As mentioned above, the adhesive composition is devoid or substantially devoid of a solvent. As used herein, the term solvent refers to a volatile liquid that is either a VOC or VOC exemption liquid. Examples of solvents that are excluded include toluene and acetone.

### AMOUNTS

### SILANE-TERMINATED POLYMER

In one or more embodiments, the adhesive compositions of the invention include at least 25 wt%, in other embodiments at least 30%, and in other embodiments at least 35 wt. % silane-terminated polymer. In these or other embodiments, the adhesive compositions of the invention include at most 80%, in other embodiments at most 75%, and in other embodiments at most 70% wt. % silane-terminated polymer. In one or more embodiments, the adhesive compositions of the invention include from about 25% to about 80%, in other embodiments from about 30% to about 75%, and in other embodiments from about 35% to about 70% wt. % silane-terminate polymer.

In one or more embodiments, the silane-terminated polymer component of the adhesive compositions of the present invention may, in one or more embodiments, include a blend of high and low molecular weight polymer. In one or more embodiments, the silane-terminated polymer component includes at least 40 wt %, in other embodiments at least 50 wt %, and in other embodiments at least 60 wt % high-molecular weight silane-terminated polymer (e.g., a molecular weight of greater than 12,000 g/mole), based upon the entire weight of the silane-terminated polymer component. In these or other embodiments, the silane-terminated polymer component includes at most 100 wt %, in other embodiments at most 80 wt %, and in other embodiments at most 70 wt % high-molecular weight silane-terminated polymer, based upon the entire weight of the silane-terminated polymer component. In one or more embodiments, the silane-terminated polymer component of the adhesive compositions includes from about 40 to about 100, in other embodiments from about 50 to about 80, and in other embodiments from about 60 to about 70 weight percent high-molecular weight silane-terminated polymer, based upon the entire weight of the silane-terminated polymer component.

In one or more embodiments, the silane-terminated polymer component includes at least 0 wt %, in other embodiments at least 20 wt %, and in other embodiments at least 30 wt % low-molecular weight silane-terminated polymer (a molecular weight of less than 12,000 g/mole), based upon the entire weight of the silane-terminated polymer component. In these or other embodiments, the silane-terminated polymer component includes at most 60 wt %, in other embodiments at most 50 wt %, and in other embodiments at most 40 wt % low-molecular weight silane-terminated polymer, based upon the entire weight of the silane-terminated polymer component. In one or more embodiments, the silane-terminated polymer component of the adhesive compositions includes from about 0 to about 60, in other embodiments from about 20 to about 50, and in other embodiments from about 30 to about 40 weight percent low-molecular weight silane-terminated polymer, based upon the entire weight of the silane-terminated polymer component.

### HYDROCARBON RESIN

The adhesive compositions of the invention include at least 1%, in other embodiments at least 3%, and in other embodiments at least 5% wt. % hydrocarbon resin. The adhesive compositions of the invention include at most 30%, in other embodiments at most 25%, and in other embodiments at most 20% wt. % hydrocarbon. In one or more embodiments, the adhesive compositions of the invention include from about 1% to about 30%, in other embodiments from about 3% to about 25%, and in other embodiments from about 5% to about 20% wt. % hydrocarbon.

### ADHESION PROMOTERS

In one or more embodiments, the adhesive compositions of the invention include at least 1%, in other embodiments at least 1.5%, and in other embodiments at least 2% wt. % adhesion promoter. In these or other embodiments, the adhesive compositions of the invention include at most 10%, in other embodiments at most 9%, and in other embodiments at most 8% wt. % adhesion promoter. In one or more embodiments, the adhesive compositions of the invention include from about 1% to about 10%, in other embodiments from about 1.5% to about 9%, and in other embodiments from about 2% to about 8% wt. % adhesion promoter.

### CATALYST

In one or more embodiments, the adhesive compositions of the invention include at least 0.05%, in other embodiments at least 0.1%, and in other embodiments at least 0.15 wt. % catalyst. In these or other embodiments, the adhesive compositions of the invention include at most 3%, in other embodiments at most 2.5%, and in other embodiments at most 2% wt. % catalyst. In one or more embodiments, the adhesive compositions of the invention include from about 0.05% to about 3%, in other embodiments from about 0.1% to about 2.5%, and in other embodiments from about 0.15% to about 2% wt. % catalyst.

### THIXOTROPE

In one or more embodiments, the adhesive compositions of the invention include at least 0%, in other embodiments at least 0%, and in other embodiments at least 0% wt. % thixotrope. In these or other embodiments, the adhesive compositions of the invention include at most 6%, in other embodiments at most 5%, and in other embodiments at most 4% wt. % thixotrope. In one or more embodiments, the adhesive compositions of the invention include from about 0% to about 6%, in other embodiments from about 0% to about 5%, and in other embodiments from about 0% to about 4% wt. % thixotrope.

### MOISTURE SCAVENGER

In one or more embodiments, the adhesive compositions of the invention include at least 0.25%, in other embodiments at least 0.5%, and in other embodiments at least 0.75% wt. % moisture scavenger. In these or other embodiments, the adhesive compositions of the invention include at most 5%, in other embodiments at most 4%, and in other embodiments at most 3% wt. % moisture scavenger. In one or more embodiments, the adhesive compositions of the invention include from about 0.25% to about 5%, in other embodiments from about 0.5% to about 4%, and in other embodiments from about 0.75% to about 3% wt. % moisture scavenger.

### FILLERS

In one or more embodiments, the adhesive compositions of the invention include at least 0%, in other embodiments at least 0%, and in other embodiments at least 0% wt. % filler. In these or other embodiments, the adhesive compositions of the invention include at most 65%, in other embodiments at most 60%, and in other embodiments at most 55% wt. % filler. In one or more embodiments, the adhesive compositions of the invention include from about 0% to about 65%, in other embodiments from about 0% to about 60%, and in other embodiments from about 0% to about 55% wt. % filler.

### ANTIOXIDANTS

In one or more embodiments, the adhesive compositions of the invention include at least 0.1%, in other embodiments at least 0.15%, and in other embodiments at least 0.2% wt. % antioxidant. In these or other embodiments, the adhesive compositions of the invention include at most 3%, in other embodiments at most 2.5%, and in other embodiments at most 2% wt. % antioxidant. In one or more embodiments, the adhesive compositions of the invention include from about 0.1% to about 3%, in other embodiments from about 0.15% to about 2.5%, and in other embodiments from about 0.15% to about 2% wt. % antioxidant.

### PLASTICIZER

In one or more embodiments, the adhesive compositions of the invention include at least 5%, in other embodiments at least 10%, and in other embodiments at least 15% wt. % plasticizer. In these or other embodiments, the adhesive compositions of the invention include at most 65%, in other embodiments at most 60%, and in other embodiments at most 55% wt. % plasticizer. In one or more embodiments, the adhesive compositions of the invention include from about 5% to about 65%, in other embodiments from about 10% to about 60%, and in other embodiments from about 15% to about 55% wt. % plasticizer.

### SOLVENT

As discussed above, the adhesive compositions of the invention may advantageously be 100% solids compositions. In one or more embodiments, the compositions may be devoid of solvent. In these or other embodiments, the adhesive compositions are substantially devoid of solvents, which refers to that amount of solvent or less that will not have an appreciable impact on the composition. In one or more embodiments, the compositions of this invention include less than 10%, in other embodiments less than 8%, and in other embodiments less than 5% wt.% solvent.

### PHENOLIC RESIN

As discussed above, the adhesive compositions of the invention are devoid or substantially devoid of phenolic resin. In one or more embodiments, the compositions may be devoid of phenolic resin. In these or other embodiments, the adhesive compositions are substantially devoid of phenolic resin, which refers to that amount of solvent or less that will not have an appreciable impact on the composition. In one or more embodiments, the compositions of this invention include less than 3%, in other embodiments less than 2%, and in other embodiments less than 1% wt.% phenolic resin.

### PREPARATION OF ADHESIVE

The adhesive compositions of the present invention may be prepared by batch mixing using conventional batch mixing equipment. In one or more embodiments, the mixer may be equipped with an emulsifier. The mixing can take place under atmospheric pressure and at room temperature. The ingredients can conveniently be introduced to the mixer by first introducing the silane-terminate polymer followed by introduction of the other ingredients. Mixing may continue until desired viscosity or level of dispersion/solubility is achieved. In particular embodiments, mixing is conducted for at least 100 minutes, in other embodiments at least 150 minutes, in other embodiments at least 180 minutes, and in other embodiments at least 190 minutes.

The adhesive compositions of this invention may be formulated as either one-part or two-part compositions. In the case of one-part compositions, the composition is preferably free of water, and contains a moisture scavenger as discussed above. In the case of a two part composition that is combined at the point of use, one part may contain a small amount of water to initiate moisture curing and components that are not sensitive to moisture, whereas the other part may contain components that are sensitive to moisture such as adhesion promoters and more reactive polymers having silicon-containing hydrolyzable terminal groups.

### CHARACTERISTICS OF ADHESIVE COMPOSITION

In one more embodiments, the adhesive composition is formulated to offer various characteristics that are advantageous in practicing the present invention.

In one or more embodiments, the adhesive composition is characterized by an advantageous dynamic viscosity. While the skilled person will appreciate that the static viscosity of the adhesive can be increased through the use of thixotropic agents, the dynamic viscosity is generally equivalent to the baseline viscosity of the adhesive composition. In other words, the thixotropic agents do not serve to drop the dynamic viscosity below that of the baseline viscosity. In one or more embodiments, the dynamic viscosity of the adhesive compositions of this invention, as measured by using a Brookfield viscometer equipped with a #6 spindle operating at room temperature and 10 rpm, is less than 20,000 cPs, in other embodiments less than 18,000 cPs, in other embodiments less than 17,000 cPs, in other embodiments less than 16,000 cPs, in other embodiments less than 15,000 cPs, in other embodiments less than 14,000 cPs, in other embodiments less than 13,000 cPs, and in other embodiments less than 11000 cPs. In one or more embodiments, the dynamic viscosity of the adhesive compositions of this invention is from about 3,000 to 20,000 cPs, in other embodiments from about 3,300 to 18,000 cPs, in other embodiments from about 4,000 to 16,000 cPs, in other embodiments from about 4,500 to 15,000 cPs, and in other embodiments from about 4,500 to about 11,000 cPs.

In one or more embodiments, the adhesive compositions of the present invention are characterized by an advantageous static viscosity, which may be measured by a Brookfield viscometer equipped with a #6 spindle operating at room temperature and 2 rpm. In one or more embodiments, the static viscosity of the adhesive composition is at least 24,000 cPs, in other embodiments at least 22,000 cPs, and in other embodiments, at least 20,000 cPs. In one or more embodiments, the static viscosity of the adhesive composition is from about 3600 to about 24,000 cPs, in other embodiments from about 4000 to about 22,000 cPs, and in other embodiments, from about 4600 to about 20,000 cPs.

Applicants have advantageously discovered that the relatively high static viscosity of the adhesive compositions of this invention give rise to several advantages including higher coverage rates while maintaining useful adhesion. These higher coverage rates stem from the low absorption of the adhesive composition into the substrate. In one or more embodiments, where the substrate includes a polyisocyanurate insulation board having a glass-reinforced paper facer, the absorption of the adhesive material into the facer and/or foam insulation board is, on a weight basis, less than 60%, in other embodiments less than 55%, in other embodiments less than 50%, and in other embodiments less than 45%.

In one or more embodiments, the adhesive compositions of this invention when used to bond EPDM rubber sheet material to a high density particleboard have generally exhibited a peel strength of at least 2.5-4 pounds per linear inch (pli) after 30 day ambient cure. However, the thermosetting reactions in these compositions substantially improve with time and temperature. In one or more embodiments, after 30 days curing at 66 °C (150 °F; normal rooftop conditions) peel strengths as high as 7.8 pli were obtained. Conversion: 1 pli = 0.175 N/mm.

### INDUSTRIAL APPLICABILITY

In particular embodiments, the adhesive may be employed in preparing a fully-adhered roofing membrane system. Practice of the present invention is not necessarily limited by the selection of a particular roofing membrane that is secured to a substrate on a roof surface. As is known in the art, numerous roofing membranes have been proposed in the art and several are used commercially including thermoset and thermoplastic roofing membranes. Commercially available thermoplastic roofing membranes may include polyvinyl chloride, or polyolefin copolymers. For example, thermoplastic olefin (TPO) membranes are available under the trade names UltraPly™, and ReflexEON™ (Firestone Building Products). Commercially available thermoset roofing membranes may include elastomeric copolymers such as ethylene-propylene-diene copolymer (EPDM) rubber and functionalized olefins such as chlorosulfonated polyethylene (CSPE). For example, EPDM membranes are available under the trade name RubberGard™, RubberGard Platinum™, RubberGard EcoWhite™, and RubberGard MAX™ (Firestone Building Products). Useful EPDM membrane is disclosed in, for example, U.S. Patent Nos 7,175,732, 6,502,360, 6,120,869, 5,849,133, 5,389,715, 4,810,565, 4,778,852, 4,732,925, and 4,657,958, which are incorporated herein by reference. EPDM membranes are commercially available from a number of sources; examples include those available under the tradenames RubberGard (Firestone Building Products) and SURE-SEAL (Carlisle SynTec).

In particular embodiments, EPDM membranes are employed. As is known in the art, EPDM membrane panels include vulcanized or cured rubber compositions. These compositions may include, in addition to the rubber that is ultimately vulcanized, fillers, processing oils, and other desired ingredients such as plasticizers, antidegradants, adhesive-enhancing promoters, etc., as well as vulcanizing agents such as sulfur or sulfur-donating compounds.

In one or more embodiments, the EPDM roofing panels have a thickness in accordance with ASTM D-4637-04. In one or more embodiments, the EPDM roofing panels have a thickness of at least 45 mil ± 10%, in other embodiments at least 60 mil ± 10%, and in other embodiments at least 90 mil ± 10%. In these or other embodiments, the EPDM roofing panels may have a thickness of less than 65 mil ± 10%, in other embodiments less than 80 mil ± 10%, and in other embodiments less than 110 mil ± 10%. Conversion: 1 mil = 0.0254 mm.

In other embodiments, the bond adhesive composition of the present invention is applied exclusively to the substrate (e.g. the roof or materials on the roof such as insulation board), and the membrane is subsequently positioned over the adhesive layer without application of the adhesive directly to the membrane.

### APPLICATION METHOD

In one or more embodiments of this invention, an adhered roofing system is constructed by applying the adhesive composition to a roof substrate to form a layer of adhesive and then subsequently contacting a surface of an EPDM panel to the layer of adhesive disposed on the substrate. Advantageously, the process can be used to construct a roofing system meeting the standards of UL and Factory Mutual for wind uplift without the need for applying an adhesive directly to the EPDM panel being installed. Moreover, these standards can be met in the absence of a fleece or other backing material applied to the membrane.

The substrate to which the adhesive composition is applied may include a roof deck, which may include steel, concrete, and/or wood. In other embodiments, the adhesive composition may be applied to insulation materials, such as insulation boards and cover boards. As those skilled in the art appreciate, insulation boards and cover boards may carry a variety of facer materials including, but not limited to, paper facers, fiberglass-reinforced paper facers, fiberglass facers, coated fiberglass facers, metal facers such as aluminum facers, and solid facers such as wood, OSB and plywood, as well as gypsum. In yet other embodiments, the adhesive composition may be applied to existing membranes. These existing membranes may include cured rubber systems such as EPDM membranes or chlorosulfonated polyethylene, thermoplastic polymers systems such as TPO membranes or PVC membranes, or asphalt-based systems such as modified asphalt membranes and/or built roof systems. Advantageously, practice of the present invention provides adhesion to asphalt-based substrates by offering sufficient oil resistance, which is required to maintain sufficient adhesion to asphalt systems.

In one or more embodiments, the adhesive composition is applied to the substrate by dip and roll techniques, which are conventional in the art of applying adhesives to substrates and/or membrane panels. In other embodiments, the adhesive composition is applied to the substrate by spraying. In one or more embodiments, the spraying may be accomplished by using airless spray equipment or air-assisted spray equipment. In one or more embodiments, the adhesive composition is atomized during the spraying operation. Useful spraying equipment is known in the art, such as the spray equipment available from Graco and Garlock. In other embodiments, the adhesive can be applied by a power roller, where the adhesive is pumped to the roller head. Examples include power rollers as supplied by Garlock. In yet other embodiments, the adhesive can be applied by using a drop spreader, which generally includes gravity feeding of the adhesive from a mobile platform such as that sold under the tradename BetterSpreader (Roofmaster).

In one or more embodiments, time is permitted between the application of the adhesive composition and application of the EPDM panel. In one or more embodiments, this time provided is less than 1 hour, in other embodiments less than 30 minutes, in other embodiments less than 10 minutes, and in other embodiments less than 3 minutes. In one or more embodiments, the time provided is from 1 minute to 1 hour.

In one or more embodiments, the wet film applied to the membrane and/or the substrate can be at least 5 mils, in other embodiments at least 7 mils, in other embodiments at least 10 mils, in other embodiments at least 13 mils, and in other embodiments at least 15 mils thick (wet film thickness). In these or other embodiments, the wet film thickness on each of the respective layers may be less than 30 mils, in other embodiments less than 25 mils, in other embodiments less than 18 mils, and in other embodiments less than 15 mils thick (wet film thickness).

It has advantageously been discovered that practice of the present invention allows for application of a thinner wet film than has been previously employed using conventional bond adhesives while achieving technologically useful bond adhesion. As a result, during use of the bond adhesive, the application rate can be reduced (i.e., less bond adhesive is needed per square foot, which translates into an increased application rate). For example, in one or more embodiments, technologically useful adhesion can be achieved at application rates of at least 50 square foot per gallon, in other embodiments at least 70 square foot per gallon, in other embodiments at least 100 square foot per gallon, in other embodiments at least 150 square foot per gallon, in other embodiments at least 200 square foot per gallon, and in other embodiments at least 250 square foot per gallon. Conversion: 1 square foot per gallon = 0.02454 m²/l.

In one or more embodiments, the EPDM panel may be applied to the adhesive layer using several known techniques. For example, the EPDM panel may be unrolled on to the adhesive layer.

### ROOF CONSTRUCTION

Aspects of the invention may be understood with reference to the figure, which shows membrane 10 adhered to substrate 12. The substrate may include one or more of a roof deck 14, an insulation layer 16, a coverboard 18, and an existing membrane 20. In other words, membrane 10 may be adhered to roof deck 14, insulation layer 16, coverboard 18, or existing membrane 20. Disposed between an adhering membrane 10 to substrate 12 is a layer 22 of adhesive, which layer may be continuous or substantially continuous between membrane 10 and substrate 12 (i.e. a fully-adhered system). In one or more embodiments, the adhesive layer covers at least 20%, in other embodiments at least 30%, in other embodiments at least 40%, in other embodiments at least 50%, and in other embodiments at least 60% of the surface of the substrate. In these or other embodiments, the adhesive layer covers up to 100%, in other embodiments less than 90%, in other embodiments less than 75%, and in other embodiments less than 60% of the surface of the substrate. Notably absent from the construction of one or more embodiments is a fleece layer between membrane 10 and substrate 12. In other words, adhesive layer 22 is adhesively bonded directly to membrane 10.

In one or more embodiments, the bond between substrate 12 and membrane 10, which is formed by adhesive layer 22, can be quantified based upon standardized peel adhesion tests pursuant to ASTM D1876. In one or more embodiments, the bond between membrane 10 and substrate 12 exceeds at least 1 pli, in other embodiments at least 1.5 pli, in other embodiments at least 2.0 pli, and in other embodiments at least 2.5 pli, where the substrate may include EPDM membrane or, in other embodiments, a glass-reinforced, paper-faced polyisocyanurate insulation board. Advantageously, in one or more embodiments, the bond formed between membrane 10 and substrate 12 exceeds the pull strength limitations and/or tensile limitations of the substrate. In other words, the substrate fails under pull force (for example the facer pulls from the insulation or substate boards) prior to the failure of adhesive layer 22. Conversion: 1 pli = 0.175 N/mm.

In order to demonstrate the practice of the present invention, and demonstrate the advantages of the present invention over the prior art, the following samples were prepared and evaluated. The examples should not, however, be viewed as limiting the scope of the invention. The claims will serve to define the invention.

### EXAMPLES

Table I provides the ingredients employed in making each adhesive sample, and then each sample was analyzed for static (i.e., baseline) viscosity, and also analyzed for adhesive strength using peel testing. Specifically, viscosity was measured using a Brookfield visometer using a #6 spindle operating at 10 rpm at room temperature. Peel testing was conducted using a modified ASTM D 413 test, wherein a one square foot EPDM membrane sample was adhered to a paper-faced isocyanurate insulation board in one instance, and to an EPDM membrane in the second instance. The substrates (i.e., the isocyanurate board and the EPDM) were also one square foot in size and the adhesive was applied exclusively to the substrate, and then the EPDM sample was applied to the adhesive layer. The adhesive was applied at an application rate of 100 square foot per gallon by weighing the exact amount of adhesive required to cover the substrate and then uniformly applying the adhesive to the substrate. Testing, which was done using an Instron apparatus, followed the procedures set forth in ASTM D 413. That is, 90 ° peels were used for the insulation board substrate and T-peels were used for the EPDM substrate.

Each sample was similarly prepared according to the following mixing procedure. The polymers containing a silicon-containing hydrolyzable terminal group, the plasticizer, and the tackifier resin were charged to a high-speed mixer equipped with a high-speed dispensing head and an outer scraping element that removed material stuck to the walls of the reactor. The mixing temperature was adjusted to 110-121 °C (230-250 °F) and mixing took place at 500 rpm for the dispenser and 9 rpm for the scraper. Once the solid material (i.e., the tackifier) was dissolved into the liquids, a vacuum was applied to remove any residual moisture. The mixing conditions, temperature, vacuum, and duration under vacuum were adjusted to achieve less than 800 ppm water. The composition was then cooled to 80 °F and mixing speeds were returned to the original mixing speed (i.e., 500 rpm). The moisture scavenger was then charged and initially mixed at the low speed (500 rpm), and then the mixing speed was increased to about 1,500 rpm for the dispensing head and 35 rpm for the scraping element. A nitrogen blanket was applied over the mixer in an effort to inhibit the introduction of moisture into the system. Following the addition of the moisture scavenger, the adhesion promoter was added and mixed using the same two-phase mixing procedure (i.e., first at 500 rpm followed by high speed mixing of 1,500 rpm). Once the adhesion promoter was blended into the system, the catalyst was added and the same two-phase mixing procedure was applied. Once all of the ingredients were added, a vacuum was again applied to the system for a short duration in an effort to remove residual moisture without volatilizing and removing an appreciable amount of the ingredients added. The composition was allowed to return to room temperature, and then samples were drawn for viscosity measurements as well as peel adhesion tests. A nitrogen blanket was maintained over the composition in order to avoid introduction of moisture.

As suggested above, Table I provides the ingredients employed in each sample, as well as the results of the peel testing and the dynamic viscosity of the adhesives. Conversion: 1 pli = 0.175 N/mm.

**Table I**

| **Sample** | **Sample 1** | **Sample 2** | **Sample 3** | **Sample 4** | **Sample 5** | **Sample 6** |
|---|---|---|---|---|---|---|
| Ingredients (grams) | | | | | | |
| Silyl-Terminated PolyetherI | 105.00 | 105.00 | 105.00 | 105.00 | 105.00 | 66.57 |
| Silyl-Terminated Polyurethane | 91.00 | 91.00 | 91.00 | 91.00 | 91.00 | -- |
| Silyl-Terminated Polyether II | -- | -- | -- | -- | -- | 53.83 |
| Silyl-Terminated Polyether III | -- | -- | -- | -- | -- | 65.10 |
| Phthalate Plasticizer | 98.00 | 98.00 | 98.00 | 98.00 | 98.00 | 106.80 |
| Phenolic Resin | 35.00 | -- | -- | -- | -- | -- |
| Moisture Scavenger | 4.55 | 4.55 | 4.55 | 4.55 | 4.55 | 4.55 |
| Adhesion Promoter | 15.05 | 15.05 | 15.05 | 15.05 | 15.05 | 15.05 |
| Catalyst | 1.40 | 1.40 | 1.40 | 1.40 | 1.40 | 1.40 |
| Rosin Ester Tackifier | -- | 35.00 | -- | -- | -- | -- |
| Dicyclopentadiene Tackifier | -- | -- | 35.00 | -- | -- | -- |
| C₅ Aliphatic Tackifier | -- | -- | -- | 35.00 | -- | -- |
| C₉ Aromatic Tackifier | -- | -- | -- | -- | 35.00 | 35.00 |

| Tests | | | | | | |
|---|---|---|---|---|---|---|
| Brookfield viscosity (cPs) | 36,500 | Too high to measure | 14,900 | 9,500 | 14,900 | 6,000 |

| Peel Test | | | | | | |
|---|---|---|---|---|---|---|
| ISO substrate (pli) | 5.45 | 3.94 | 1.96 | 3.55 | 6.11 | 1.94 |
| EPDM substrate (pli) | 2.65 | 1.50 | 2.08 | 2.52 | 2.67 | 1.48 |

Silyl-Terminated Polyether I was characterized by a number average molecular weight of greater than about 12,000, had a polydispersity of about 2.5, and was believed to be difunctional. Silyl-Terminated Polyether II was characterized by a number average molecular weight of less than about 12,000 g/mole, a polydispersity of about 1.5, and was believed to be difunctional. Silyl-Terminated Polyether III was characterized by a number average molecular weight of great than about 12,000 g/mole, a polydispersity of about 2.0, and was believed to be difunctional. The silyl-terminated polyurethane was was characterized by a number average molecular weight above about 12,000 g/mole, a polydispersity of about 2.7, and was believe to be difunctional. The moisture scavenger was a vinyl alkoxy silane. The adhesion promoter was an amino siloxane. The catalyst was an organo tin catalyst.

## Claims

1. A bond adhesive composition comprising:
i. a polymer having a silicon-containing hydrolyzable terminal group; and
ii. a hydrocarbon resin, where the composition is substantially devoid of phenolic resin, said hydrocarbon resin being a Cg aromatic monomer hydrocarbon resin, the composition comprising 1 to 30 wt. % of said hydrocarbon resin,
wherein the composition further includes a plasticizer, at least one of a catalyst, a moisture scavenger, an adhesion promoter, and a thixotropic compound, and wherein the polymer having a silicon-containing hydrolyzable terminal group is a silane-terminated polymer.

2. The composition of any of the preceding claims, where the adhesive composition has a dynamic viscosity of less than 20,000 cPs by using a Brookfield viscometer equipped with a #6 spindle operating at room temperature and 10 rpm.

3. A method for forming an adhered membrane roof system, the method comprising:
i. applying a bond adhesive composition to a substrate on a roof to form an adhesive layer, where the bond adhesive includes a polymer having a silicon-containing hydrolyzable terminal group and a hydrocarbon resin devoid of phenolic resin, said hydrocarbon resin being a C₉ aromatic monomer hydrocarbon resin, the composition comprising 1 to 30 wt. % of said hydrocarbon resin, wherein the composition further includes a plasticizer, at least one of a catalyst, a moisture scavenger, an adhesion promoter, and a thixotropic compound, and wherein the polymer having a silicon-containing hydrolyzable terminal group is a silane-terminated polymer; and
ii. applying a membrane directly to the adhesive layer.

4. The method of claim 3, where the adhesive forms a substantially continuous layer between the substrate and the membrane over at least 40% of the entire roof surface.

5. The method of any of the preceding claims, where the method is devoid of any step of applying the adhesive directly to the rubber membrane.

6. The method of any of the preceding claims, where said step of applying the adhesive includes dip and roll techniques, or spraying the adhesive on the substrate.

7. The method of any of the preceding claims, where the substrate includes an insulation board, a coverboard, or an existing membrane.

8. The method of any of the preceding claims, where the existing membrane is a roofing membrane and includes an asphalt-based roofing membrane.

9. The method of any of the preceding claims, where said step of applying a membrane includes applying an EPDM membrane.

10. The method of any of the preceding claims, where the membrane is a rubber-based membrane, or a thermoplastic-based membrane.

## Patentansprüche

1. Haftbindemittelzusammensetzung, umfassend:
i. ein Polymer mit einer siliciumhaltigen hydrolysierbaren Endgruppe; und
ii. ein Kohlenwasserstoffharz, wobei die Zusammensetzung im Wesentlichen frei von Phenolharz ist, wobei das Kohlenwasserstoffharz ein aromatisches C₉-Monomer-Kohlenwasserstoffharz ist, wobei die Zusammensetzung 1 bis 30 Gew.-% des Kohlenwasserstoffharzes umfasst,
wobei die Zusammensetzung ferner einen Weichmacher, mindestens eines aus einem Katalysator, einem Feuchtigkeitsfänger, einem Haftvermittler und einer thixotropen Verbindung einschließt und wobei das Polymer mit einer siliciumhaltigen hydrolysierbaren Endgruppe ein Polymer mit Silan-Endgruppe ist.

2. Zusammensetzung nach einem der vorstehenden Ansprüche, wobei die Haftzusammensetzung eine dynamische Viskosität von weniger als 20.000 cPs aufweist, gemessen mit einem Brookfield-Viskosimeter, das mit einer Spindel #6 ausgestattet ist und bei Raumtemperatur und 10 rpm arbeitet.

3. Verfahren zum Ausbilden eines angeklebten Membran-Bedachungssystems, wobei das Verfahren Folgendes umfasst:
i. Aufbringen einer Haftbindemittelzusammensetzung auf ein Substrat auf einem Dach, um eine Haftschicht zu bilden, wobei das Haftbindemittel ein Polymer mit einer siliciumhaltigen hydrolysierbaren Endgruppe und ein Kohlenwasserstoffharz einschließt, das frei von Phenolharz ist, wobei das Kohlenwasserstoffharz ein aromatisches C₉-Monomer-Kohlenwasserstoffharz ist, wobei die Zusammensetzung 1 bis 30 Gew.-% des Kohlenwasserstoffharzes umfasst, wobei die Zusammensetzung ferner einen Weichmacher, mindestens eines aus einem Katalysator, einem Feuchtigkeitsfänger, einem Haftvermittler und einer thixotropen Verbindung einschließt und wobei das Polymer mit einer siliciumhaltigen hydrolysierbaren Endgruppe ein Polymer mit Silan-Endgruppe ist; und
ii. Aufbringen einer Membran direkt auf die Haftschicht.

4. Verfahren nach Anspruch 3, wobei das Haftmittel über mindestens 40 % der gesamten Dachfläche eine im Wesentlichen durchgängige Schicht zwischen dem Substrat und der Membran bildet.

5. Verfahren nach einem der vorstehenden Ansprüche, wobei das Verfahren keinen Schritt eines direkten Aufbringens des Haftmittels auf die Kautschukmembran aufweist.

6. Verfahren nach einem der vorstehenden Ansprüche, wobei der Schritt des Aufbringens des Haftmittels Tauch- und Walztechniken oder Sprühen des Klebstoffs auf das Substrat einschließt.

7. Verfahren nach einem der vorstehenden Ansprüche, wobei das Substrat eine Isolierungsplatte, eine Deckplatte oder eine vorhandene Membran einschließt.

8. Verfahren nach einem der vorstehenden Ansprüche, wobei die vorhandene Membran eine Dachbahn ist und eine Dachbahn auf Asphaltbasis einschließt.

9. Verfahren nach einem der vorstehenden Ansprüche, wobei der Schritt des Aufbringens einer Membran das Aufbringen einer EPDM-Membran einschließt.

10. Verfahren nach einem der vorstehenden Ansprüche, wobei die Membran eine Membran auf Kautschukbasis oder eine Membran auf thermoplastischer Basis ist.

## Revendications

1. Composition adhésive de liaison comprenant :
i. un polymère ayant un groupe terminal hydrolysable contenant du silicium ; et
ii. une résine hydrocarbonée, où la composition est essentiellement dépourvue de résine phénolique, ladite résine hydrocarbonée étant une résine hydrocarbonée monomère aromatique en C₉, la composition comprenant 1 à 30 % en poids de ladite résine hydrocarbonée,
dans laquelle la composition inclut en outre un plastifiant, au moins l'un parmi un catalyseur, un piégeur d'humidité, un promoteur d'adhésion, et un composé thixotropique, et dans laquelle le polymère ayant un groupe terminal hydrolysable contenant du silicium est un polymère à terminaison silane.

2. Composition selon l'une quelconque des revendications précédentes, où la composition adhésive a une viscosité dynamique inférieure à 20 000 cP en utilisant un viscosimètre Brookfield équipé d'un mobile cylindrique n°6 opérant à température ambiante et 10 tr/min.

3. Procédé pour former un système de toit à membrane collée, le procédé comprenant :
i. l'application d'une composition adhésive de liaison à un substrat sur un toit pour former une couche adhésive, où l'adhésif de liaison inclut un polymère ayant un groupe terminal hydrolysable contenant du silicium et une résine hydrocarbonée dépourvue de résine phénolique, ladite résine hydrocarbonée étant une résine hydrocarbonée monomère aromatique en C₉, la composition comprenant 1 à 30 % en poids de ladite résine hydrocarbonée, dans lequel la composition inclut en outre un plastifiant, au moins l'un parmi un catalyseur, un piégeur d'humidité, un promoteur d'adhésion et un composé thixotropique, et dans lequel le polymère ayant un groupe terminal hydrolysable contenant du silicium est un polymère à terminaison silane ; et
ii. l'application d'une membrane directement sur la couche adhésive.

4. Procédé selon la revendication 3, où l'adhésif forme une couche essentiellement continue entre le substrat et la membrane sur au moins 40 % de la surface entière de toit.

5. Procédé selon l'une quelconque des revendications précédentes, où le procédé est dépourvu d'une quelconque étape d'application de l'adhésif directement sur la membrane de caoutchouc.

6. Procédé selon l'une quelconque des revendications précédentes, où ladite étape d'application de l'adhésif inclut des techniques de trempage et d'application au rouleau, ou de pulvérisation de l'adhésif sur le substrat.

7. Procédé selon l'une quelconque des revendications précédentes, où le substrat inclut un panneau d'isolation, un panneau de couverture, ou une membrane existante.

8. Procédé selon l'une quelconque des revendications précédentes, où la membrane existante est une membrane de toiture et inclut une membrane de toiture à base d'asphalte.

9. Procédé selon l'une quelconque des revendications précédentes, où ladite étape d'application d'une membrane inclut l'application d'une membrane EPDM.

10. Procédé selon l'une quelconque des revendications précédentes, où la membrane est une membrane à base de caoutchouc, ou une membrane à base de thermoplastique.
